Europäisches Patentamt

European Patent Office

Office européen des brevets

(19)

(11) Numéro de publication : **0 301 960 B1**

(12)                  **FASCICULE DE BREVET EUROPEEN**

(45) Date de publication du fascicule du brevet :
27.11.91 Bulletin 91/48

(51) Int. Cl.⁵ : **E05F 15/12, F16H 25/20**

(21) Numéro de dépôt : **88401946.4**

(22) Date de dépôt : **27.07.88**

(54) **Dispositif d'actionnement d'un panneau mobile.**

(30) Priorité : **31.07.87 FR 8711165**

(43) Date de publication de la demande :
**01.02.89 Bulletin 89/05**

(45) Mention de la délivrance du brevet :
**27.11.91 Bulletin 91/48**

(84) Etats contractants désignés :
**DE GB IT**

(56) Documents cités :
**DE-A- 1 477 729**
**DE-A- 3 015 528**
**DE-C- 3 304 487**
**GB-A- 2 092 702**
**GB-A- 2 169 652**

(73) Titulaire : **AUTOMOBILES PEUGEOT**
**75, avenue de la Grande Armée**
**F-75116 Paris (FR)**
Titulaire : **AUTOMOBILES CITROEN**
**62 Boulevard Victor-Hugo**
**F-92200 Neuilly-sur-Seine (FR)**

(72) Inventeur : **Berthommier, Jean-Paul**
**"Les Treize Arpents" 6, Allée du Mail**
**F-78340 Les Clayes Sous Bois (FR)**

(74) Mandataire : **Boivin, Claude**
**9, rue Edouard-Charton**
**F-78000 Versailles (FR)**

## Description

Il est parfois difficile ou compliqué, dans le cas de certains éléments pivotants, de prévoir des charnières matérialisant l'axe de pivotement.

Le document GB-A-2169652 décrit un dispositif de commande de panneau mobile à l'aide d'un moteur électrique, dans lequel le panneau est relié à une bielle dentée en prise avec un pignon calé sur l'arbre du moteur. Mais ce panneau est relié par une charnière à une structure fixe.

La présente invention a pour objet un dispositif qui permet d'ouvrir ou de fermer une ouverture par un élément monté pivotant par rapport à une structure fixe, à l'aide d'au moins un moteur électrique, sans qu'il soit nécessaire d'utiliser des charnières.

Ce dispositif est caractérisé en ce que l'élément est relié à la structure fixe par au moins une paire de bielles articulées sur l'élément et pouvant se déplacer axialement par rapport à la structure fixe, et en ce qu'il comprend des moyens à action différentielle interposés entre les bielles et le ou les moteurs électriques.

Dans un mode de réalisation de l'invention, chacune des bielles est constituée par une tige filetée engagée dans un filetage d'un pignon relié à l'arbre du moteur, les pas des filetages et/ou des diamètres des pignons étant différents.

Si le panneau a une grande largeur, le dispositif peut comporter deux ou plusieurs paires de bielles. Chacune de ces paires peut comporter son propre moteur de commande ; les diverses paires de bielles peuvent également comporter un moteur unique, leurs moyens à action différentielle étant reliés entre eux par une transmission mécanique. L'invention est applicable notamment pour assurer l'ouverture et la fermeture d'une ouverture par un élément mobile de carrosserie, tel qu'un battant de porte, un panneau de coffre, un déflecteur d'air.

On a décrit ci-après, à titre d'exemple non limitatif, un mode de réalisation du dispositif selon l'invention, avec référence au dessin annexé dans lequel :

La Figure 1 en est une coupe par un plan perpendiculaire à l'axe de la charnière ;

La Figure 2 en est une coupe schématique montrant l'entrainement des vis ;

La Figure 3 est une vue en perspective montrant l'utilisation du dispositif dans le cas d'un élément de grande largeur.

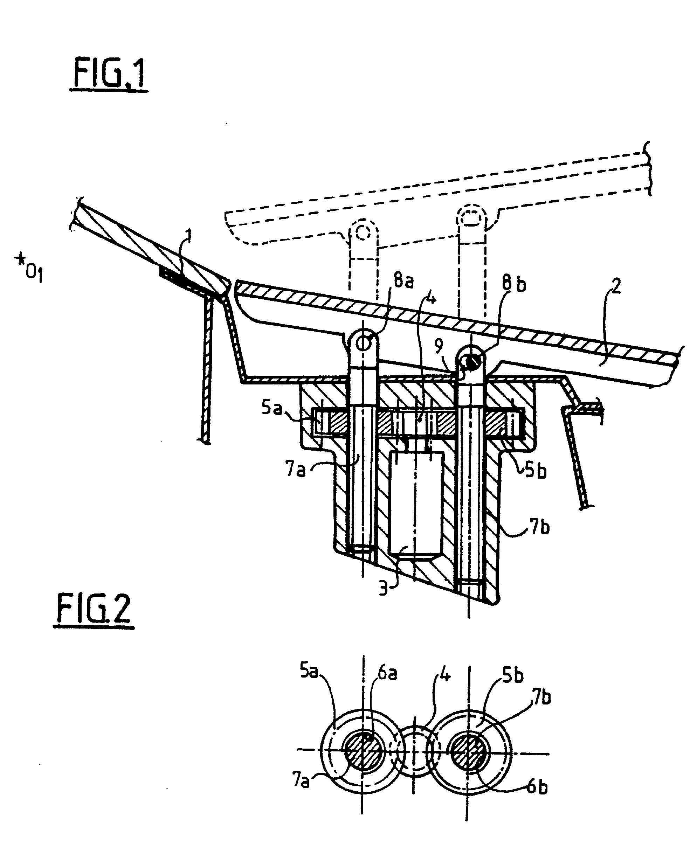

A la Figure 1, on voit un élément 1 qui présente une ouverture pouvant être obturée par un panneau 2 : le mouvement de ce panneau doit être sensiblement un mouvement de pivotement autour d'un axe 01 ne pouvant être matérialisé par une charnière.

L'élément 1 porte un moteur électrique 3 sur l'arbre duquel est fixé un pignon 4. Celui-ci est en prise avec deux pignons 5a et 5b pouvant tourner dans l'élément 1 mais non se déplacer axialement par rapport à celui-ci. Chacun de ces pignons présente un filetage axial 6a ou 6b et est monté sur une vis 7a ou 7b pouvant coulisser dans l'élément 1.

Les filetages des pignons sont de même sens mais de pas différents, celui du pignon 5b situé le plus loin de l'axe $O_1$ étant le plus grand. Les axes des vis 7a et 7b sont parallèles et situés dans un plan perpendiculaire à l'axe $O_1$. L'extrémité libre de la vis 7a est articulée sur le panneau 2 par un pivot 8a alors que celle de la vis 7b porte un axe 8b mobile dans une boutonnière 9.

Lorsqu'on fait fonctionner le moteur 3 à partir de la position représentée au dessin, les deux vis 7a et 7b se déplacent axialement, mais le déplacement de la vis 7b est supérieur à celui de la vis 7a. Le panneau s'élève en même temps que son inclinaison augmente ; il a un mouvement de pivotement. Il est facile, par un choix convenable des axes des vis 7a et 7b et de la différence de pas des filetages 6a et 6b, de s'arranger pour que l'axe de pivotement soit l'axe $O_1$.

Le mouvement différentiel des vis 7a et 7b peut être obtenu en donnant au pignon 5b un diamètre extérieur supérieur à celui du pignon 5a. Le pignon 5b peut également avoir un diamètre extérieur et un pas de filetage supérieur à ceux du pignon 5a.

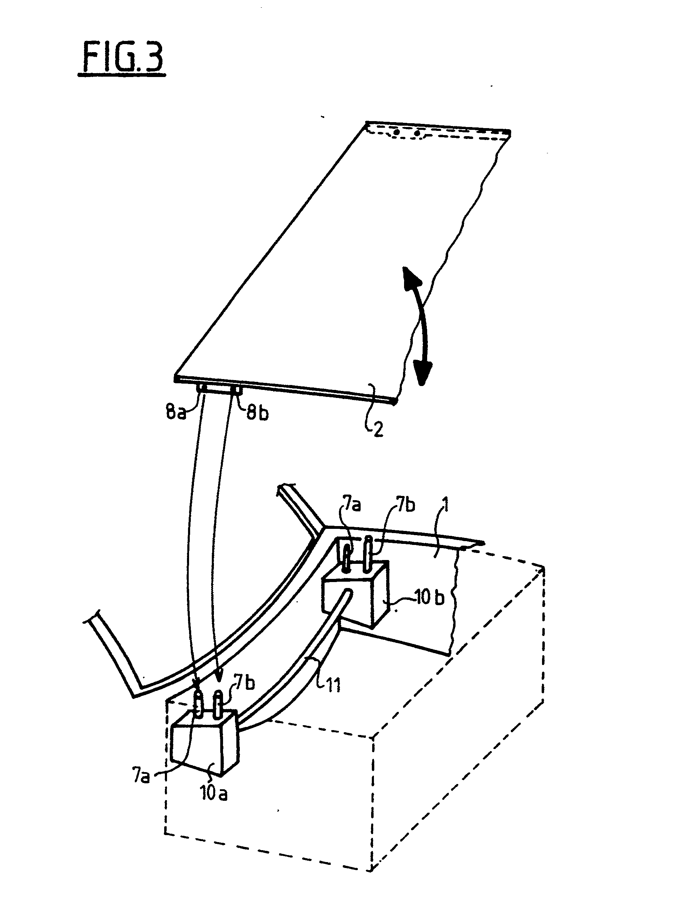

Lorsque le panneau 2 a une grande longueur, il est nécessaire de prévoir deux actionneurs 10a et 10b comportant chacun deux vis 7a et 7b, comme le montre la Fig.3. Si les deux actionneurs 10a et 10b soulèvent le même poids, il peuvent comporter chacun leur propre moteur 3 ; si ceux-ci sont alimentés par la même tension, ils sont alors relativement bien synchronisés ; une réinitialisation se fait en butées haute et basse. Si le panneau ne supporte pas de désynchronisation, les deux actionneurs peuvent comporter un moteur commun logé dans l'un d'eux et être reliés par une transmission mécanique 11, par exemple un câble souple, ou bien comporter chacun leur propre moteur, les deux moteurs étant synchrones et alimentés par un dispositif électronique de type connu ou synchronisés par une transmission mécanique.

## Revendications

1. Dispositif pour ouvrir ou fermer une ouverture par un élément monté pivotant par rapport à une structure fixe, à l'aide d'au moins un moteur électrique, caractérisé en ce que l'élément (2) est relié à la structure fixe (1) par au moins une paire de bielles (7a et 7b) articulées sur l'élément (2) et pouvant se déplacer axialement par rapport à la structure fixe (1), et en ce qu'il comprend des moyens à action différentielle interposés entre les bielles (7a-7b) et le ou les moteurs électriques (3).

2. Dispositif selon la revendication 1, caractérisé en ce que chacune des bielles est constituée par une tige filetée (7a ou 7b) engagée dans un filetage d'un pignon (5a ou 5b) relié à l'arbre du moteur (3), les pas des filetages et/ou les diamètres des pignons (5a et 5b) étant différents.

3. Dispositif selon la revendication 1 ou 2, caractérisé en ce que l'élément (2) est relié à la structure fixe (1) par deux ou plusieurs paires de bielles.

4. Dispositif selon la revendication 3, caractérisé en ce que chacune des paires de bielles comporte son propre moteur de commande.

5. Dispositif selon la revendication 4, caractérisé en ce que les divers moteurs sont synchronisés par une transmission mécanique.

6. Dispositif selon la revendication 4, caractérisé en ce que les moteurs sont des moteurs synchrones et alimentés par un dispositif électronique assurant le fonctionnement synchronisé des moteurs.

7. Dispositif selon la revendication 3, caractérisé en ce que les diverses paires de bielles comportent un moteur unique, leurs moyens à action différentielle étant reliés entre eux par une transmission mécanique.

## Patentansprüche

1. Vorrichtung zum Öffnen oder Schließen einer Öffnung durch ein Bauteil, das in Bezug auf einen feststehenden Aufbau mittels wenigstens einem Elektromotor schwenkbar angebracht ist, **dadurch gekennzeichnet**, daß das Bauteil (2) mit dem feststehenden Aufbau (1) durch wenigstens ein Paar von Schubstangen (7a und 7b) verbunden ist, die am Bauteil (2) schwenkbar angeschlossen sind und sich in Bezug auf den feststehenden Aufbau (1) axial verschieben können, und daß sie eine Einrichtung mit unterschiedlicher Wirksamkeit aufweist, die zwischen den Schubstangen (7a-7b) und dem oder den Elektromotoren (3) angeordnet ist

2. Vorrichtung nach Anspruch 1, **dadurch gekennzeichnet**, daß jede der Schubstangen als eine Gewindestange (7a oder 7b) ausgebildet ist, die in das Gewinde eines Zahnrades (5a oder 5b) eingreift, das mit der Welle des Motors (3) verbunden ist, wobei die Gewindesteigungen und/oder die Durchmesser der Zahnräder (5a und 5b) unterschiedlich sind.

3. Vorrichtung nach Anspruch 1 oder 2, **dadurch gekennzeichnet**, daß das Bauteil (2) mit dem feststehenden Aufbau (1) durch zwei oder mehrere Schubstangenpaare verbunden ist.

4. Vorrichtung nach Anspruch 33, **dadurch gekennzeichnet**, daß jedes der Schubstangenpaare seinen eigenen Antriebsmotor besitzt.

5. Vorrichtung nach Anspruch 4, **dadurch gekennzeichnet**, daß die verschiedenen Motoren durch ein mechanisches Getriebe synchronisiert sind.

6. Vorrichtung nach Anspruch 4, **dadurch gekennzeichnet**, daß die Motoren Synchronmotoren sind und von einer elektronischen Vorrichtung gespeist werden, welche die synchronisierte Arbeitsweise der Motoren sicherstellt.

7. Vorrichtung nach Anspruch 3, **dadurch gekennzeichnet**, daß die verschiedenen Schubstangenpaare einen einzigen Motor aufweisen, wobei ihre Mittel zur unterschiedlichen Wirksamkeit miteinander durch ein mechanisches Getriebe verbunden sind.

## Claims

1. Device to open or close an opening by means of an element mounted pivoting with respect to a fixed structure with the aid of at least one electric motor, wherein the element (2) is connected to the fixed structure (1) by at least one pair of connecting rods (7a and 7b) joined onto the element (2) and able to move axially with respect to the fixed structure (1), and wherein it includes differential action means inserted between the connecting rods (7a-7b) and the electric motor(s) (3).

2. Device according to claim 1, wherein each connecting rod is constituted by a screw rod (7a or 7b) engaged in a thread of a gear (5a or 5b) connected to the shaft of the motor (3), the steps of the threads and/or the diameters of the gears (5a and 5b) being different.

3. Device according to claim 1 or 2, wherein the element (2) is connected to the fixed structure (1) by two or more pairs of connecting rods.

4. Device according to claim 3, wherein each of the pairs of connecting rods has its own control motor.

5. Device according to claim 4, wherein the various motors are synchronized by a mechanical transmission. ·

6. Device according to claim 4, wherein the motors are synchronous motors and fed by an electronic device ensuring the synchronized functioning of the motors.

7. Device according to claim 3, wherein the various pairs of connecting rods comprise a single motor, their differential action means being interconnected by a mechanical transmission.

## FIG.1

## FIG.2

# FIG.3

8a  8b  2

7a  7b  1

10 b

7 b

11

7a

10 a